# EUROPEAN PATENT APPLICATION

(11) **EP 2 317 029 A2**
(43) Date of publication of application: **04.05.2011**
(21) Application number: 10189461.6
(22) Date of filing: 29.10.2010
(51) Int. Cl.: E04G 21/32, A62B 35/04, F16F 7/12

(54) **Anchorage device for fall protection**

(30) Priority: 30.10.2009 NL 2003739
(71) Applicant: Van Valkenhoef Beheer B.V., 2102 EC Heemstede (NL)
(72) Inventor: Van Valkenhoef, Paulus Cornelis Willibrord, 2102 EC, Heemstede (NL); Keizer, Mathieu, 2512 BR, Den Haag (NL)
(74) Representative: Vermeulen, Martijn

(57) **Abstract**

An anchorage device comprises a housing for attaching to an object, such as a roof, and a coupling member to which a fall protection device for a person can be coupled. The anchorage device is provided with a damper device, which is mounted in the housing. The damper device is provided with a first part and a second part. The coupling member is connected to the second part. The second part can be moved with respect to the first part between a first position, in which the coupling member is adjacent to the housing, and a second position, in which the coupling member protrudes with respect to the housing. A brake member is provided for increasing friction between the first part and the second part and/or causing deformation of the first part and/or second part when the second part is moved from the first position to the second position.

## Description

The invention relates to an anchorage device, comprising a housing for attaching to an object, such as a roof, and a coupling member to which a fall protection device for a person can be coupled.

NL1035225 discloses an anchorage device which can be connected to a base. The base has a base plate which is attached to a roof of a building. The anchorage device has a coupling member provided with an anchorage eye, to which a lifeline of a fall protection device for a person can be secured. The coupling member is connected to a rod which is arranged through the housing and attached to the base plate. When the person secured to the anchorage eye accidentally falls down the roof, the housing is subject to plastic deformation and the rod with plug absorbing the load associated with the fall. The base plate of the base also deforms, which means that the base has to be replaced as well.

An object of the invention is to provide an improved anchorage device.

This object is achieved according to the invention in that the anchorage device is provided with a damper device, which is mounted in the housing, in which the damper device is provided with a first part and a second part, in which the coupling member is connected to the second part, and in which the second part can be moved with respect to the first part between a first position, in which the coupling member is adjacent to the housing, and a second position, in which the coupling member protrudes with respect to the housing, and in which a brake member is provided for increasing friction between the first part and the second part and/or for causing deformation of the first part and/or the second part when the second part is moved from the first position to the second position.

In use, the anchorage device is connected to a base. The base comprises a base plate which is attached to, for example, a roof of a building. When one or more persons are secured to the coupling member of the anchorage device by a lifeline or line network and accidentally fall down the roof, the force associated with the fall is absorbed by plastic deformation of the housing. The housing may topple over during its plastic deformation. At the same time, the damper device extends which causes friction between the first and second parts and/or causes deformation of the first and/or second part. The brake member may be attached to the first and/or second part. As a result of the damper device mounted within the housing, the anchorage device effectively absorbs the loads applied to it. The anchorage device according to the invention has excellent absorbing characteristics by means of deformation and/or friction using the integrated damper device. As a result, there is a reduced risk of plastic deformation of the base plate of the base and/or forces on the fittings, which are connected to the roof structure. With the anchorage device according to the invention, it may be sufficient to replace the anchorage device only. In such case, the base can be re-used and fitted with a new anchorage device.

In an embodiment, the brake member comprises anti-slip material, and in which the first part and the second part are in contact with each other by means of the anti-slip material. The anti-slip material increases the friction between the first part and the second part when the second part is moved with respect to the first part. Also, the presence of the anti-slip material or another material which increases friction between first part and the second part may increase the minimum activation force for the damper device.

It is possible that the first part is provided with a guide part, and in which the second part is provided with a sliding part which is guided in a sliding manner with respect to the guide part between the first position and the second position.

In an embodiment, the guide part is tubular, preferably a hollow cylinder, and the sliding part is displaceably arranged in the tubular guide part and comprises the brake member. The sliding part may be provided with a rod, which is received within the tubular guide part. The coupling member is mounted to the rod. The brake member, for instance a friction plug, is attached to the rod so as to be in contact with the inside wall of the guide tube.

In an embodiment, the outer dimension, for instance outer diameter of the brake member is larger than the inner dimension, for instance inner diameter of the tubular guide part. Since the outer dimension of the brake member is larger than the inner dimension of the tubular guide part displacement of the brake member in the tubular guide part will result in increased friction between the brake member and the tubular guide part and/or to deformation of the brake member and/or the tubular guide part.

In an embodiment, the minimum activation force at which the damper device is activated is relative high, for instance at about 600 kg.

In an embodiment, the housing comprises a circumferential wall, which is closed at one end by an upper wall, and in which the first part is suspended from the upper wall within the circumferential wall of the housing. The circumferential wall may be conical or frusto-conical.

The upper wall of the housing may provided with an opening, in which the second part extends through the opening, and in which the coupling member is arranged outside of the housing. The damper device is arranged within the circumferential wall of the housing, whereas the coupling member is accessible for engagement, for example by a lifeline or line network.

It is possible that the deformability of the circumferential wall of the housing is greater than the deformability of the first part arranged within the circumferential wall of the housing. The circumferential wall of the housing is plastically deformable under the influence of a load corresponding to a fall of a person. For example, the housing deforms plastically when a force of more than 150 kg is exerted on the coupling member of the anchorage device. When a load corresponding to a person falling from a roof is exerted on the coupling member of the anchorage device, the housing will deform plastically while the first part will hardly, if at all, deform plastically. The second part can still be displaced with respect to the first part after plastic deformation of the housing.

When a large force is exerted on the anchoring device, for instance by a person connected to the anchoring device falling of a roof, this force may be absorbed by deformation of the housing, toppling over of the damper device with respect to the base, friction between the first part and the second part or deformation of the first part and/or second part in the damper device, and possibly deformation of the base plate.

The deformation of the housing and toppling over of the damper device results in that the longitudinal axis of the damper system is more aligned with respect to the direction from which the force is exerted on the damper system.

In an embodiment, the housing comprises metal, such as steel. The circumferential wall of the housing may be thin-walled. The wall thickness of the circumferential wall is, for example, 1-5 mm, for instance 1-2 mm or about 4 mm. The circumferential wall may be formed from a plate. When the plate is relatively thin, the circumferential wall of the housing may deform under the influence of a load exerted by a person falling from the roof.

In an embodiment, a stiffening plate is arranged at the upper wall of the housing, and in which a U-shaped or V-shaped bracket is suspended from the stiffening plate, and in which the first part is provided with a guide tube, which is placed in the U-shaped or V-shaped bracket, and in which the brake member makes contact with the inner side of the guide tube. The brake member may be an anti-slip plug which is mounted on the second part and which contacts the inner side of the guide tube. When the coupling member draws the second part having the anti-slip plug through the guide tube, the displacement of the second part is damped by friction.

It is possible that the housing comprises a bottom wall, and in which the U- or V-shaped bracket is connected to the bottom wall of the housing by means of a connecting part. When the coupling member is fully extended, the second part abuts against the upper wall of the housing. The upper wall of the housing forms a stop for the displacement of the second part of the damper device. A high load may cause plastic deformation of the connecting part when the second part has been fully extended.

The connecting part may serve as a tilting location during toppling over of the damper device with respect to the base.

The invention also relates to an assembly comprising a base, and an anchorage device as described above, in which the anchorage device is connected to the base and extends from the base, in which the base is provided with a base plate having an underside for attaching to the object, and in which a reinforcement plate is arranged onto the underside of the base plate. The reinforcement plate reinforces the base plate so as to limit or prevent plastic deformation of the base plate as a result of a load corresponding to a fall of a person. Furthermore, the reinforcement plate provides a reliable connection location for connection of an anchoring device on the base plate.

It is possible that the anchorage device is detachably connected to the base. After plastic deformation of the housing, the anchorage device may be replaced by a new anchorage device. For example, the anchorage device is connected to the base by a bolt. When a large force is exerted on the anchorage device, it may be desirable to replace the complete anchoring device including the base plate.

The base plate may be arranged onto a roof, in which the reinforcement plate extends between the base plate and the roof. In this case, the anchorage device or as a part of a line network forms a safety device for providing a fall protection for a person working on a roof of a building. For example, the base plate is provided with apertures, through which bolts can be inserted for screwing the base plate onto the roof.

The invention further relates to an anchorage system, comprising at least two assemblies as described above, in which a safety line is arranged to the coupling members of the anchorage devices. A person may engage a lifeline of a fall protection device to the safety line.

It is noted that the reinforcement plate of the base is of independent importance, i.e. the reinforcement plate of the base can be used in various anchorage devices, for example also in an otherwise known anchorage device. The aspect of the reinforcement plate of the base can thus be the subject matter of a separate patent application. The aspect of the reinforcement plate of the base relates to a base, which is provided with a base plate having an underside for attaching to an object, such as a roof and in which a reinforcement plate is arranged onto the underside of the base plate. An anchorage device is connected to the base and extends from the base. The anchorage device is provided with a coupling member to which a fall protection device for a person can be coupled. As a result of the reinforcement plate, plastic deformation of the base plate is reduced when a person who is secured to the coupling device by a lifeline falls off the roof.

In an embodiment, a water-resistant covering is arranged over the base plate for sealing the base plate with respect to the roof in a water-resistant manner.

In an embodiment, the reinforcement plate is fixedly mounted on the base plate, for instance by welding.

In an embodiment, the reinforcement plate comprises a hole having an inner thread for connection of the anchoring device.

The invention will now be explained in more detail below with reference to exemplary embodiments shown in the drawing.
Figure 1 shows an exploded perspective view of an assembly comprising a base and an anchorage device according to a first embodiment of the invention.
Figure 2 shows a perspective view, partly broken away, of the assembly shown in figure 1.
Figure 3 shows a cross-sectional view of the assembly shown in figure 2.
Figure 4 shows a perspective view of an assembly comprising a base and an anchorage device according to a further aspect of the invention.
Figure 5 shows an exploded perspective view of the assembly shown in figure 4.

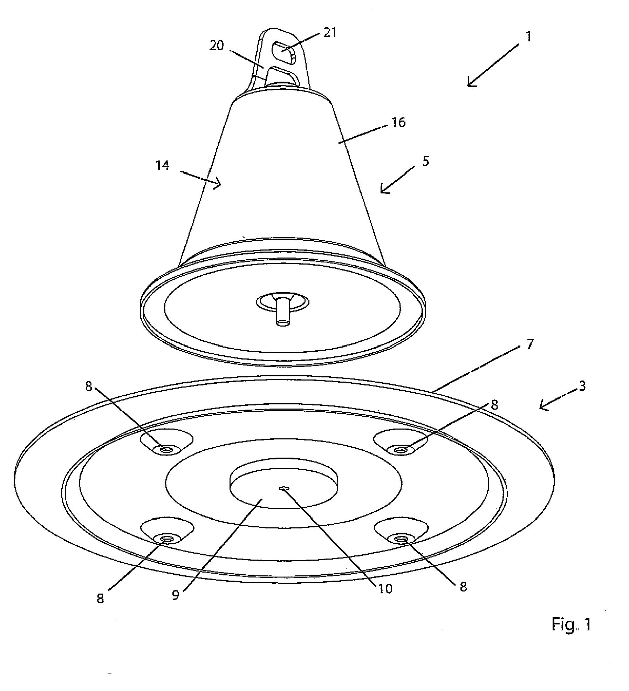

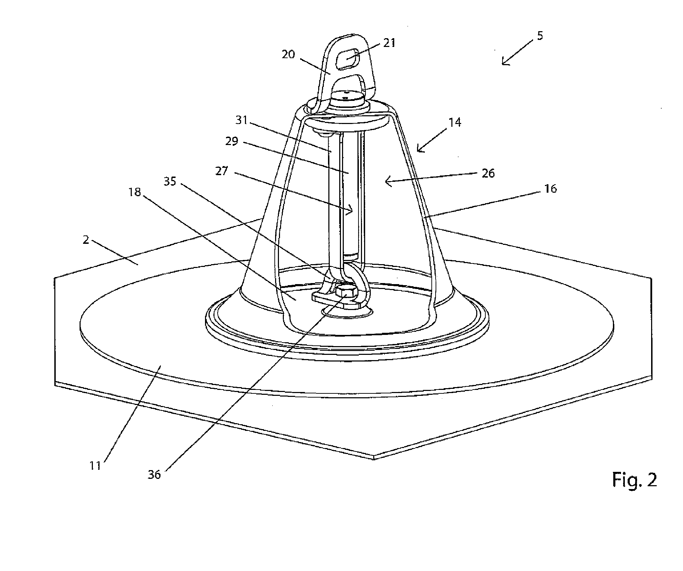

The assembly 1 shown in figure 1 comprises a base 3 and an anchorage device 5. The base 3 has a base plate 7, which is provided with recessed portions. The recessed portions each have an aperture 8, through which a bolt can be inserted for screwing the base plate 7 onto a roof 2 of a building (see figure 2). The bolt heads are received in the recessed portion so as to be flush with the base plate 7. The base plate 7 has a central convex portion. The assembly may be mounted on an existing roof covering.

A reinforcement plate 9 is arranged at the underside of the base plate 7. The diameter of the reinforcement plate 9 is smaller than the diameter of the base plate 7. The reinforcement plate 9 is mounted onto the underside of the base plate 7 before installing the base plate 7 to the roof 2. The reinforcement plate 9 can be attached to the base plate 7 in various ways, for example by welding or gluing. The base plate 7 and the reinforcement plate 9 each have a central opening 10, which are aligned with respect to each other. The base plate 7 is covered by a watertight covering 11 for sealing the base plate 7 in a watertight manner.

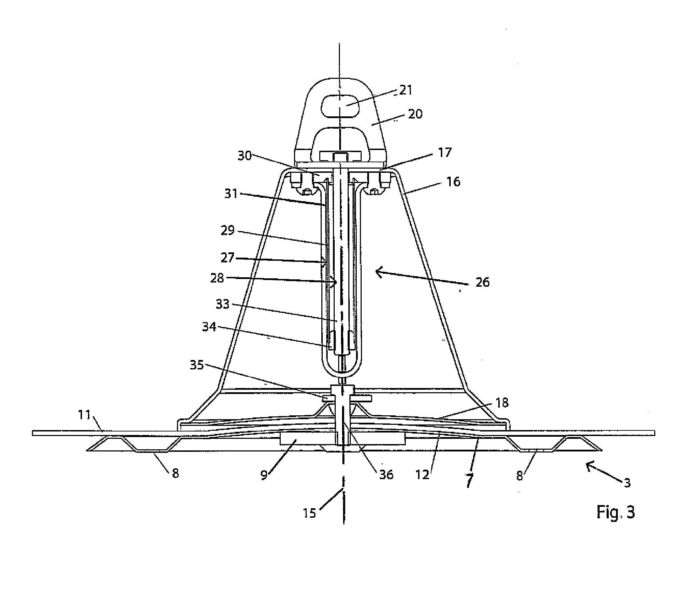

In this exemplary embodiment, the anchorage device 5 forms an anchorage post or an anchor. The anchorage device 5 defines a longitudinal axis 15 which runs substantially perpendicular to the base plate 7 (see figure 3). The anchorage device 5 comprises a housing 14, which extends away from the base 3. The housing 14 is thin-walled.

The housing 14 has a circumferential wall 16, an upper wall 17 and a bottom wall 18. The circumferential wall 16 is frusto-conical. The circumferential wall 16 is closed at its upper end by the upper wall 17. The circumferential wall 16 and the upper wall 17 are integrated, e.g. they are formed from a plate sheet material. The bottom wall 18 forms a bottom lid which closes the circumferential wall 16 at its lower end.

The anchorage device 5 comprises a coupling member 20 to which a lifeline can be connected. The lifeline may be connected to a fall protection harness for a person working on the roof 2. The coupling member 20 has an anchorage eye 21. The coupling member 20 can be rotated about the longitudinal axis 15 of the housing 14.

The anchorage device 5 comprises a damper device 26 which is arranged within the housing 14. The damper device 26 has a first part 27 and a second part 28. In this exemplary embodiment, the first part 27 comprises a guide tube 29 and a U-shaped bracket 31. The U-shaped bracket 31 comprises flanges which are bolted to a stiffening plate 30 which is fitted to the underside of the upper wall 17 of the housing 14. Thus, the U-shaped bracket 31 is suspended from the stiffening plate 30.

The guide tube 29 is also suspended from the stiffening plate 30. The guide tube 29 is received within the U-shaped bracket 31. The deformability of the circumferential wall 16 of the housing 14 may be greater than the deformability of the first part 27. In such embodiment, the circumferential wall 16 will deform plastically before the first part 27 starts deforming plastically. It is remarked that the bracket may also be V-shaped or any other suitable shape. The advantage of a V-shaped bracket may be that there may be more space between the legs of the V and the guide tube. In the U shaped variant as shown in Figures 1-3 any deformation of the U shape may lead to deformation of the guide tube and as a result to disfunctioning of the damper device. By providing more space between the bracket and the guide tube, for instance by a V-shaped bracket or a wider U, this potential problem may be avoided.

The U-shaped bracket 31 is connected to the bottom wall 18 of the housing by means of a connecting part 35. The connecting part 35 is attached to the base plate 7 and the reinforcement plate 9 using a bolt 36. Thus, the bolt 36 extends through the connecting part 35, the bottom wall 18 of the housing 14, the base plate 7 and the reinforcement plate 9. Using the bolt 36, the anchorage device 5 is detachably connected to the base 3. The housing 14 is clamped onto the base 3 as the connecting part 35 is connected to the U-shaped bracket 31, which is in turn attached to the stiffening plate 30 and the upper wall 17.

In this exemplary embodiment, the second part 28 comprises a central rod 33 which extends within the guide tube 29. The central rod 33 has a brake member in the form of a plug 34 having a diameter which is larger than the inner diameter of the guide tube 29. As a consequence, the plug 34 will cause friction and/or deformation when displaced in the guide tube 29. The second part 28 contacts the guide tube 29 only at the plug 34. At its upper end, the central rod 33 extends through central openings in the stiffening plate 30 and in the upper wall 17 of the housing 14. The central rod 33 is attached to the coupling member 20, i.e. the central rod 33, the plug 34 and the coupling member 20 are rigidly connected together.

The second part 28, 33, 34 and the coupling member 20 can be moved with respect to the guide tube 29 between a first and second position. In the first, retracted position, the coupling member 20 is adjacent to the upper wall 17 of the housing 14. When the second part 28, 33, 34 is extended to its second position, the plug 34 will be guided through the guide tube 29. In the second, extended position, the coupling member 20 protrudes with respect to the upper wall 17 of the housing 14. During the displacement of the second part 28, 33, 34 from the first, retracted position to the second, extended position, the plug 34 causes friction between the guide tube 29 and the second part 28, 33, 34, and the displacement of the plug 34 may result in deformation of the guide tube 29 and/or the plug 34. As a result of the friction and/or deformation, the displacement of the second part 28, 33, 34 is damped.

When the person working on the roof 2 is secured to the anchorage eye 21 of the coupling member 20 by a lifeline and accidentally falls down the roof 2, the force associated with the fall is absorbed by plastic deformation, travelling distance and friction damping. The load plastically plastically deforms the coupling member 20 and the housing 14. The circumferential wall 16 of the housing 14 may topple over during its plastic deformation. At the same time, the damper device 26 extends which causes friction between the plug 34 and the guide tube 29 and/or deformation of the guide tube 29 and/or plug 34. As a result of the damper device 26 mounted within the housing 14, the anchorage device 5 has excellent absorbing characteristics.

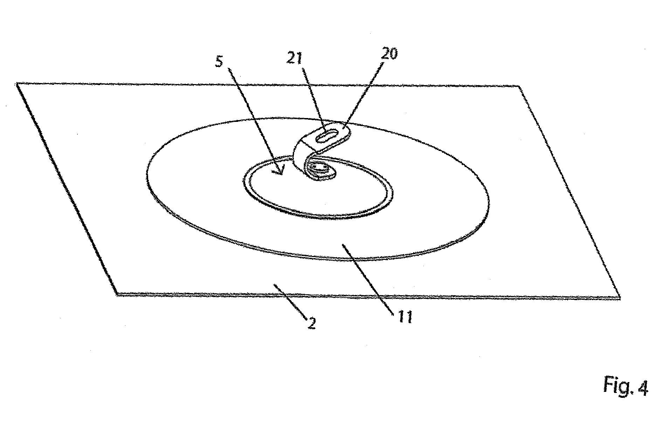

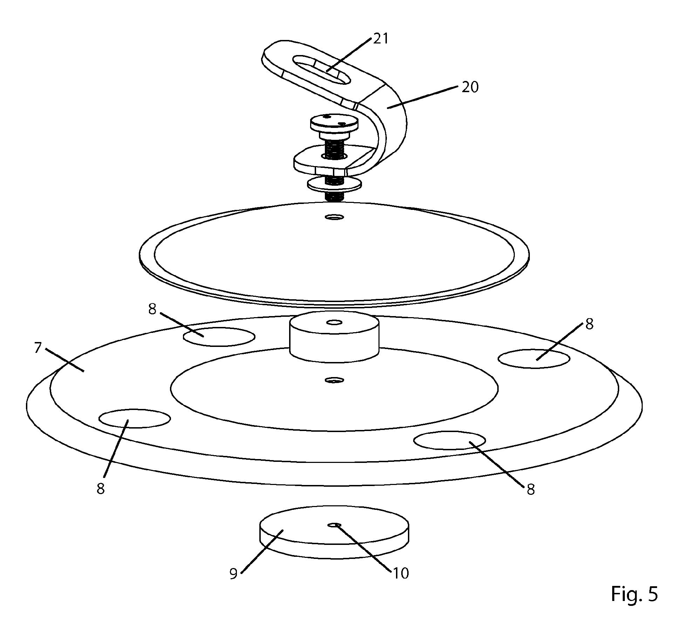

The reinforcement plate arranged at the underside of the base plate is of independent importance. The base plate having a reinforcement plate at its underside can be used with a number of anchorage devices, such as anchoring posts for lifelines as shown in Figures 1-3 and single anchor points as shown in Figures 4 and 5.

Figures 4 and 5 show an assembly comprising a base and an anchoring device which differs from the anchoring device shown in figures 1-3. The same reference numerals are used for denoting the same or similar parts. The assembly may be mounted on a rooftop, for instance on an existing roof covering. The base plate of the assembly is the same as the base plate of the embodiment of Figures 1-3. Therefore, when desired the anchoring devices of the embodiments of Figures 1-3 and Figures 4, 5 may be interchanged.

The reinforcement plate is preferably fixedly mounted on the base plate, for instance by welding and comprises a hole having an inner thread for connection of the anchoring device. Any other suitable connection type may also be provided in the reinforcement plate. An advantage of this construction is that the anchoring device on the base plate may be replaced by another anchoring device without the base plate being dismounted from the roof. Furthermore, the reinforcement plate provides reinforcement of the base plate so that the base plate can be used in combination with more different kinds of anchoring devices.

The embodiments shown in the figures are only examples of the invention which do not limit the scope of the invention in any way.

## Claims

1. Anchorage device (5), comprising a housing (14) for attaching to an object, such as a roof (2), and a coupling member (20) to which a fall protection device for a person can be coupled, wherein the anchorage device (5) is provided with a damper device (26), which is mounted in the housing (14), in which the damper device (26) is provided with a first part (27) and a second part (28), in which the coupling member (20) is connected to the second part (28), and in which the second part (28) can be moved with respect to the first part (27) between a first position, in which the coupling member (20) is adjacent to the housing (14), and a second position, in which the coupling member (20) protrudes with respect to the housing (14), and in which a brake member (34) is provided for increasing friction between the first part (27) and the second part (28) and/or for causing deformation of the first part (27) and/or the second part (28) when the second part (28) is moved from the first position to the second position.

2. Anchorage device according to claim 1, in which the brake member (34) comprises anti-slip material, and in which the first part (27) and the second part (28) are in contact with each other by means of the anti-slip material.

3. Anchorage device according to claim 1 or 2, in which the first part (27) is provided with a guide part (29), and in which the second part (28) is provided with a sliding part which is guided in a sliding manner with respect to the guide part (29) between the first position and the second position.

4. Anchorage device according to claim 3, in which the guide part (29) is tubular, preferably a hollow cylinder, and in which the sliding part and is displaceably arranged in the tubular guide part and comprises the brake member (34).

5. Anchorage device according to claim 4, in which the outer dimension of the brake member is larger than the inner dimension of the tubular guide part.

6. Anchorage device according to one of the preceding claims, in which the housing (14) comprises a circumferential wall (16), which is closed at one end by an upper wall (17), and in which the first part (27) is suspended from the upper wall (17) within the circumferential wall (16) of the housing (14).

7. Anchorage device according to claim 6, in which the upper wall (17) of the housing (14) is provided with an opening, and in which the second part (28) extends through the opening, and in which the coupling member (20) is arranged outside of the housing (14).

8. Anchorage device according to claim 6 or 7, in which the deformability of the circumferential wall (16) of the housing (14) is greater than the deformability of the first part (27) arranged within the circumferential wall (16) of the housing.

9. Anchorage device according to one of the preceding claims, in which the housing (14) comprises metal, such as steel.

10. Anchorage device according to one of claims 6-9, in which a stiffening plate (30) is arranged at the upper wall (17) of the housing (14), and in which a U-shaped or V-shaped bracket (31) is suspended from the stiffening plate, and in which the first part is provided with a guide tube, which is placed in the U-shaped or V-shaped bracket, and in which the brake member (34) makes contact with the inner side of the guide tube (27).

11. Anchorage device according to claim 10, in which the housing (14) comprises a bottom wall (18), and in which the U- or V-shaped bracket (31) is connected to the bottom wall (18) of the housing (14) by means of a connecting part (35).

12. Assembly comprising a base (3), and an anchorage device (5), in which the anchorage device (5) is connected to the base (3) and extends from the base (3), in which the base (3) is provided with a base plate (7) having an underside for attaching to the object, and in which a reinforcement plate (9) is arranged onto the underside of the base plate (7).

13. Assembly according to claim 12, in which the anchorage device (5) is detachably connected to the base (3).

14. Assembly according to claim 12 or 13, in which the base plate (7) is mounted onto a roof (2), and in which the reinforcement plate (9) extends between the base plate (7) and the roof (2).

15. Anchorage system, comprising at least two assemblies according to one of claims 12-14, in which a safety line or safety line system is arranged to the coupling members (20) of the anchorage devices (5).
